# EUROPÄISCHE PATENTSCHRIFT

(11) **EP 0 864 472 B1**
(45) Veröffentlichungstag und Bekanntmachung des Hinweises auf die Patenterteilung: **11.02.2004**
(21) Anmeldenummer: 98104143.7
(22) Anmeldetag: 09.03.1998
(51) Int. Cl.: B60S 1/34, F16C 33/74

(54) **Antriebsvorrichtung, insbesondere für Scheibenwischer an Kraftfahrzeugen**
Drive device, especially for a motor vehicle windscreen wiper
Dispositif d'entraînement, en particulier pour essuie-glace de véhicule automobile

(30) Priorität: 15.03.1997 DE 19710859
(43) Veröffentlichungstag der Anmeldung: 16.09.1998
(73) Patentinhaber: Valeo Wischersysteme GmbH, 74321 Bietigheim-Bissingen (DE)
(72) Erfinder: Walther, Bernd, 74321 Bietigheim-Bissingen (DE); Scheele, Hubert, 74189 Weinsberg (DE)
(74) Vertreter: Jahn, Wolf-Diethart

(56) Entgegenhaltungen:
- EP-A- 0 635 651
- FR-A- 2 033 803
- FR-A- 2 142 099
- FR-A- 2 716 656
- GB-A- 1 071 565

## Beschreibung

Die Erfindung betrifft eine Antriebsvorrichtung, insbesondere für Scheibenwischer an Kraftfahrzeugen mit den Merkmalen des Oberbegriffs des Patentanspruches 1.

Eine derartige Antriebsvorrichtung ist aus der DE-PS 39 14 231 bekannt und umfaßt eine in einem Gehäuse drehbar gelagerte Wischwelle, welche aus einer Stirnseite des Gehäuses herausragt. Im Abstand zu der Stirnseite des Gehäuses ist eine Befestigungsstelle für ein Antriebselement, nämlich einen Wischhebel, vorgesehen. Die Wischwelle ist in dem Gehäuse mittels eines Gleitlagers gelagert und im Bereich des Wellendurchtritts liegt ein Axialspalt zwischen der Gehäusebohrung und der Wellenoberseite vor. Der Axialspalt wird von einem in axialer Richtung wirksamen Dichtungselement verschlossen und der axialen Sicherung des Dichtungselementes dient eine an dem Gehäuse befestigte Buchse. Es hat sich gezeigt, daß die Dichtwirkung der Antriebsvorrichtung verbesserungswürdig ist, weil die elastische Anlage der Dichtlippen an den Dichtflächen im Laufe der Zeit nachläßt und dadurch die Dichtfunktion nach längerem Gebrauch nicht mehr gewährleistet ist.

Aus der EP 0 635 651 A1 ist eine gattungsgemäße Lagereinrichtung für eine Wischwelle bekannt geworden. Zwischen einem Gehäuse der Wischwelle und der Wischwelle ist ein Dichtring vorgesehen, der über einen sich an dem Gehäuse abstützenden Haltering dichtend gepresst wird. Zwischen der Stirnseite des Gehäuses und dem Antriebselement ist eine Radialspalt vorhanden.

Aus der GB-A-1 071 565 ist eine Lageranordnung für eine Wischwelle bekannt geworden. Die Wischwelle wird in einem Lagergehäuse mit einer Tellerfeder zum Ausgleich von Axialspiel beaufschlagt. Dichtelemente zur radialen und axialen Abdichtung der Welle gegenüber dem Gehäuse sind nicht vorgesehen.

Aus der FR-A-2 142 099 ist eine in einem Gehäuse gelagerte Wischwelle bekannt geworden. Zwischen dem Gehäuse und einem an dem freien Ende der Wischwelle angeordneten Antriebselement ist eine Manschette vorgesehen. Die Manschette liegt hierbei jeweils an der Mantelfläche des Gehäuses und dem Antriebselement an.

Aus der FR-A-2 033 803 ist eine in einem Gehäuse gelagerte Wischwelle bekannt geworden, die ein Antriebselement aufweist. Das Gehäuse ist hierbei mittels einer auf das Gehäuse aufschraubbaren Mutter gehaltert. Zwischen der Mutter und dem Antriebselement ist ein aus einem elastischen Material bestehender Manschettenring vorgesehen.

Der vorliegenden Erfindung liegt die Aufgabe zugrunde, eine bekannte Antriebsvorrichtung dahingehend zu verbessern, dass zum einen die Wischwellendurchführung auch nach längerem Gebrauch noch zuverlässig abgedichtet ist und zum anderen eine Geräuschentwicklung ausgehend von der Antriebsvorrichtung minimiert wird. Diese Aufgabe soll möglichst einfach und kostengünstig gelöst werden.

Die Aufgabe wird mit einer Antriebsvorrichtung gemäß dem Patentanspruch 1 gelöst.

Dadurch, daß das axial wirksame Dichtungselement den gesamten Abstand zwischen Stirnseite des Gehäuses und Antriebselement übergreift und den entsprechenden Radialspalt verschließt, ist der mögliche Eintrittsort für eindringende Schmutzpartikel besonders weit von den Lagerungsstellen der Welle entfernt, so daß gegebenenfalls von außen eingedrungener Schmutz oder Flüssigkeit erst einen großen Abstand zwischen der Eintrittsstelle und der Lagerstelle überwinden, bis es gegebenenfalls zu schädigenden Wirkungen an der Lagerstelle kommt.

Bei einer bevorzugten Ausführungsform der Erfindung ist das Dichtungselement an dem Gehäuse befestigt und beaufschlagt mit einer Dichtfläche eine zugeordnete Anlagefläche des Antriebselementes. Weil das Dichtungselement die zugeordnete Anlagefläche des Antriebselementes beaufschlagt, wird die Dichtwirkung nicht durch Unrundheiten der Wischerwelle oder durch Verschleiß der Wischerwelle im Bereich der Kontaktfläche des Dichtelementes beeinflußt. Schließlich muß das Dichtungselement nicht zwangsläufig besonders genau gegenüber der Wischerwelle zentriert werden, damit eine gute Dichtungsfunktion eintritt.

Weitere Vorteile und Ausführungsbeispiele der Erfindung gehen aus Unteransprüchen zusammen mit der Beschreibung und der Zeichnung hervor. In der Zeichnung zeigt:
- Fig. 1: Eine Antriebsvorrichtung in Seitenansicht;
- Fig. 2: eine erfindungsgemäße Antriebsvorrichtung mit axial wirksamem Dichtungselement in teilweise ab- und aufgeschnittenem Zustand in größerem Maßstab; und
- Fig. 3: ein weiteres Ausführungsbeispiel der Erfindung in einer Ansicht wie in Fig. 2.

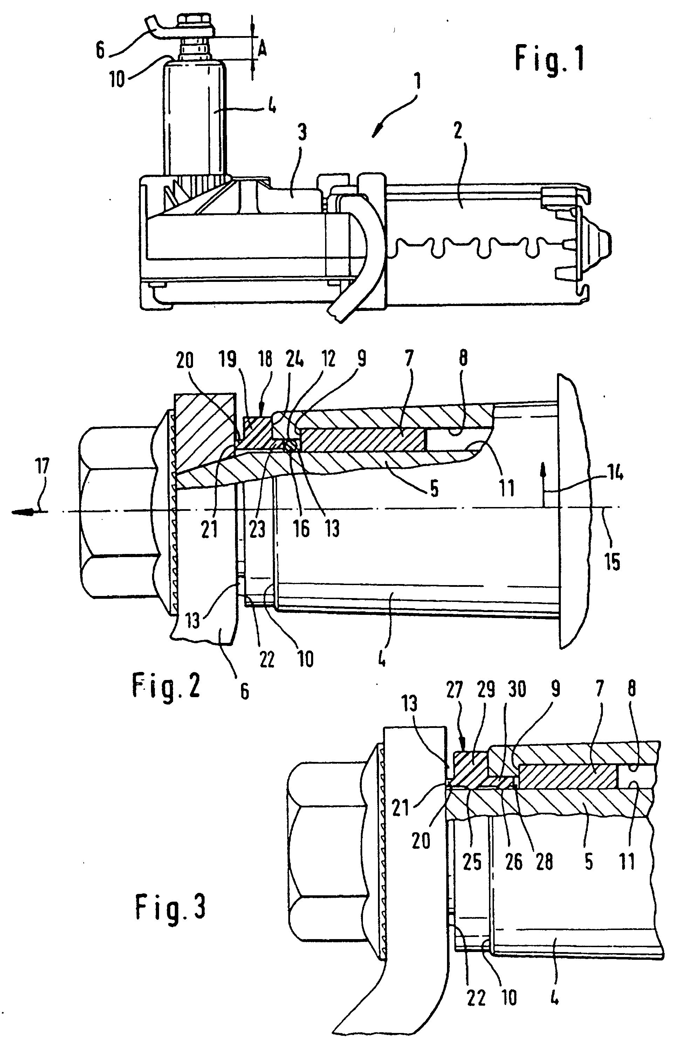

Eine Antriebsvorrichtung für Scheibenwischer umfaßt gemäß Fig. 1 einen Wischermotor 2 mit hier nicht weiter interessierenden elektrischen und mechanischen Teilen, ein Getriebegehäuse 3, das beispielsweise aus Kunststoff besteht und an den Wischermotor 2 angeflanscht ist und schließlich ein Gehäuse 4 zur drehbaren Lagerung der Wischwelle 5 mit dem daran befestigten Antriebselement 6 in Form eines Wischarms oder Wischhebels. Der Lagerung der Wischwelle 5 in dem Gehäuse 4 dienen vorzugsweise Gleitlager 7, die in eine Bohrung 8 des Gehäuses 4 eingepreßt sind und in axialer Richtung an einer Schulter 9 anliegen. Die Pressung der Gleitlager 7 ist so stark, daß sie sich bei der pendelnden Bewegung der Wischwelle 5 nicht gegenüber dem Gehäuse 4 verdrehen können. Vorzugsweise werden zwei Gleitlager eingesetzt, welche einen gewissen Abstand zueinander aufweisen. Die Wischwelle 5 ragt an einer Stirnseite 10 aus dem Gehäuse 4 und im Abstand A zu der Stirnseite 10 ist das Antriebselement 6 an der Wischwelle 5 befestigt. Im Bereich des Wellendurchtritts liegt zwischen der Wellenoberfläche 11 und einer Durchgangsbohrung 12 ein Axialspalt 13 vor, welcher in radialer Richtung 14 bezogen auf die Wischwellenachse 15 gemäß Fig. 2 von einem Dichtungselement 16 verschlossen wird. Gemäß der Fig. 2 ist das Dichtungselement 16 ein O-Ring, welcher unmittelbar an der Wellenoberfläche 11 und der Durchgangsbohrung 12 anliegt und dadurch den Axialspalt 13 verschließt. Der Abstand A zwischen der Stirnseite 10 und dem Antriebselement 6 führt zu einem Radialspalt. Wie die Figuren zeigen, ist in dem Abstand A ein in axialer Richtung 17 bezogen auf die Wischwellenachse 15 wirksames Dichtungselement 18 vorgesehen, welches den Radialspalt verschließt. Das Dichtungselement 18 besteht aus einem zylindrischen Grundkörper 19 sowie einem axialen Vorsprung 20, welcher mit einer Dichtfläche 21 versehen ist, die unmittelbar eine zugeordnete Anlagefläche 22 des Antriebselementes 6 beaufschlagt. Im übrigen ist das Dichtungselement 18 an dem Gehäuse 4 befestigt und verfügt über einen zweiten Vorsprung 23, welcher in den Axialspalt 13 eingreift. In diesem Zusammenhang erfüllt die Durchgangsbohrung 12 eine Zentrierfunktion für das Dichtungselement 18, welches mit einem Außendurchmesser des zweiten Vorsprungs 23 radial an der Durchgangsbohrung 12 anliegt. Der zweite Vorsprung 23 dient damit einerseits der Befestigung des Dichtungselementes 18 und hält andererseits den O-Ring 16 in korrekter Position in dem Axialspalt 13. An dem Grundkörper 19 befindet sich ferner noch eine Ringfläche 24, die der axialen Abstützung an der Stirnseite 10 dient. Wie bereits beschrieben wurde, verschließt das Dichtungselement 18 den Abstand A federnd und es bleibt darauf hinzuweisen, daß es zumindest teilweise elastisch ausgebildet ist, um diese Federfunktion zu erfüllen. Folglich bieten sich insbesondere elastische Kunststoff- und Gummiwerkstoffe zur Herstellung an.

Die elastische Wirkung des Dichtungselementes 18 führt in vorteilhafter Weise nicht nur zu einer verbesserten Dichtungswirkung, sondern ebenfalls zu einer Verringerung des Spiels, welches die Wischerwelle 5 in axialer Richtung 17 gegenüber dem Gehäuse 4 besitzt. Durch die Federwirkung des Dichtungselementes 18 in dem Abstand A kommt es quasi zu einer ständigen Zugkraft, welche danach trachtet, die Wischerwelle 5 nach radial außen zu ziehen. Weil ein nicht dargestellte Anschlagteil den Axialweg begrenzt, liegt somit ein ständiger Spielausgleich vor. Dieser Spielausgleich führt in vorteilhafter Weise zu einer geringeren Geräuschbelästigung durch axiale Verschiebebewegungen der Wischerwelle 5 in den Umkehrlagen.

Fig. 3 zeigt ein abgewandeltes Ausführungsbeispiel, bei dem radial wirksame Dichtlippen 25,26 einstückig an das Dichtelement 27 angeformt sind. Die Dichtlippen 25,26 beaufschlagen radial die Wellenoberfläche 11 und verschließen den Axialspalt 28. Die Dichtlippen 25,26 befinden sich im wesentlichen mittig und nach radial innen weisend an dem Grundkörper 29 und dem Vorsprung 30. Schließlich ist zu bemerken, daß der Vorsprung 30 im Unterschied zu der Ausführungsform gemäß Fig. 2 länger ausgeführt ist, weil das gesonderte Dichtungselement 16 in Form des O-Rings hierbei entfällt. Das radial abdichtende Dichtungselement ist hierbei quasi an das Dichtungselement 27 angeformt, was den Vorteil aufweist, daß lediglich ein Dichtungselement 27 montiert werden muß. Weil es sich um Kunststoffbauteile handelt, kann der Anspritzvorgang einfach und kostengünstig bewerkstelligt werden, so daß sich die gesamte Kostenlast, aber insbesondere der Montageaufwand, verringert. Auch die übrigen Vorteile, die sich durch die axiale Abdichtung mit dem Dichtungselement 27 ergeben, insbesondere der verlängerte axiale Weg, den gegebenenfalls eingedrungene Schmutzpartikel absolvieren müssen, um bis zum dem Lager 7 zu gelangen, sind auch hierbei gegeben.

## Patentansprüche

1. Antriebsvorrichtung, insbesondere für Scheibenwischer an Kraftfahrzeugen, mit einer in einem Gehäuse (4) drehbar gelagerten Wischwelle (5), welche aus einer Stirnseite (10) des Gehäuses (4) herausragt und im Abstand (A) zu der Stirnseite mit einem Antriebselement (6) versehen ist, wobei im Bereich des Wellendurchtritts ein Axialspalt (13,28) vorliegt, welcher von einem Dichtungselement (16,25,26) in radialer Richtung (14) verschlossen wird, **dadurch gekennzeichnet, daß** mindestens ein in axialer Richtung (17) wirksames, zumindest teilweise elastisches Dichtungselement (18,27) vorgesehen ist, welches in dem Abstand (A) zwischen Antriebselement (6) und Stirnseite (10) des Gehäuses (4) angeordnet ist und den Radialspalt derart federnd verschließt, dass die Wischwelle (5) zum Axialspielausgleich nach axial außen beaufschlagt wird.

2. Antriebsvorrichtung nach Anspruch 1, **dadurch gekennzeichnet, daß** das axial wirksame Dichtungselement (18,27) an dem Gehäuse (4) befestigt ist und mit einer Dichtfläche (21) eine zugeordnete Anlagefläche (22) des Antriebselementes (6) beaufschlagt.

3. Antriebsvorrichtung nach einem oder mehreren der vorhergehenden Ansprüche, **dadurch gekennzeichnet, daß** das axial wirksame Dichtungselement (18,27) einen zylindrischen Grundkörper (19,29) und einen Vorsprung (20) mit einer Dichtfläche (21) aufweist.

4. Antriebsvorrichtung Anspruch 3, **dadurch gekennzeichnet, daß** das axial wirksame Dichtungselement (18,27) einen zweiten Vorsprung (23,30) aufweist, welcher in den Axialspalt (13,28) eingreift.

5. Antriebsvorrichtung nach Anspruch 4, **dadurch gekennzeichnet, daß** der zweite Vorsprung (23,30) mit einem Außendurchmesser an einer Durchgangsbohrung (12) des Gehäuses (4) anliegt.

6. Antriebsvorrichtung nach einem oder mehreren der vorhergehenden Ansprüche, **dadurch gekennzeichnet, daß** sich das axial wirksame Dichtungselement (18,27) mit einer Ringfläche (24) an der Stirnseite (10) abstützt.

7. Antriebsvorrichtung nach einem oder mehreren der vorhergehenden Ansprüche, **dadurch gekennzeichnet, daß** das axial wirksame Dichtungselement (18,27) mit einstückig daran angeordneten radial wirksamen Dichtlippen (25,26) versehen ist.

8. Antriebsvorrichtung nach einem oder mehreren der vorhergehenden Ansprüche, **dadurch gekennzeichnet, daß** die Stirnseite (10) mit Halteelementen für das axial wirksame Dichtungselement (18,27) versehen ist.

9. Antriebsvorrichtung nach einem der vorhergehenden Ansprüche, **dadurch gekennzeichnet, dass** der Kontaktbereich des Dichtungselements (18,27) an dem Gehäuse (4) und der Kontaktbereich des Dichtungselements (18,27) an dem Antriebselement (6) wenigstens weitgehend einen gleichen radialen Abstand zur Wischwellenachse (15) aufweisen.

## Claims

1. Drive device, in particular for windscreen wipers on motor vehicles, having a wiper shaft (5) mounted rotatably in a housing (4), which wiper shaft projects out from an end face (10) of the housing (4) and at a spacing (A) from the end face is provided with a drive element (6), there being in the region of the shaft exit an axial gap (13, 28) which is closed by a sealing element (16, 25, 26) in the radial direction (14), **characterized in that** at least one sealing element (18, 27) which acts in the axial direction (17) and is at least partially elastic is provided, said sealing element being arranged in the spacing (A) between the drive element (6) and the end face (10) of the housing (4) and closing the radial gap in a resilient manner such that the wiper shaft (5) is acted upon axially outwards in order to compensate for axial play.

2. Drive device according to Claim 1, **characterized in that** the axially acting sealing element (18, 27) is attached to the housing (4) and acts upon an associated bearing surface (22) of the drive element (6) by means of a sealing surface (21).

3. Drive device according to one or more of the preceding claims, **characterized in that** the axially acting sealing element (18, 27) has a cylindrical basic body (19, 29) and a projection (20) with a sealing surface (21).

4. Drive device according to Claim 3, **characterized in that** the axially acting sealing element (18, 27) has a second projection (23, 30) which engages in the axial gap (13, 28).

5. Drive de vice according to Claim 4, **characterized in that** the second projection (23, 30) bears with an outer diameter on a through -hole (12) of the housing (4).

6. Drive device according to one or more of the preceding claims, **characterized in that** the axially acting sealing element (18, 27) is supported on the end face (10) by an annular surface (24).

7. Drive device according to one or more of the preceding claims, **characterized in that** the axially acting sealing element (18, 27) is provided with radially acting sealing lips (25, 26) that are arranged integrally thereon.

8. Drive device according to one or more of the preceding claims, **characterized in that** the end face (10) is provided with retaining elements for the axially acting sealing element (18, 27).

9. Drive device according to one of the preceding claims, **characterized in that** the area of contact of the sealing element (18, 27) on the housing (4) and the area of contact of the sealing element (18, 27) on the drive element (6) are at least substantially the same radial distance away from the wiper shaft axis (15).

## Revendications

1. Dispositif d'entraînement, en particulier pour un essuie-glace de véhicule, avec un arbre d'essuie-glace (5) disposé de manière pivotante dans un boîtier (4), qui dépasse d'un côté frontal (10) du boîtier (4) et est doté, à une distance (A) du côté frontal, d'un élément d'entraînement (6), moyennant quoi, dans la zone du passage de l'arbre, se trouve une fente axiale (13, 28), qui est fermée par un élément d'étanchéité (16, 25, 26) dans la direction radiale (14), **caractérisé en ce qu'**il est au moins prévu un élément d'étanchéité (18, 27) agissant dans la direction axiale, au moins en partie élastique, qui est disposé à la distance (A) entre l'élément d'étanchéité (6) et le côté frontal (10) du boîtier (4), et ferme la fente radiale à la manière d'un ressort, de telle sorte que l'arbre de l'essuie-glace (5) est sollicité axialement vers l'extérieur afin de compenser le jeu.

2. Dispositif d'entraînement selon la revendication 1, **caractérisé en ce que** l'élément d'étanchéité agissant axialement (18, 27) est fixé sur le boîtier (4), et sollicite avec une surface d'étanchéité (21) une surface d'appui correspondante (22) de l'élément d'entraînement (6).

3. Dispositif d'entraînement selon l'une quelconque ou plusieurs des revendications précédentes, **caractérisé en ce que** l'élément d'étanchéité agissant axialement (18, 27) présente un corps de base cylindrique (19, 29) et une saillie (20) avec une surface d'étanchéité (21).

4. Dispositif d'entraînement selon la revendication 3, **caractérisé en ce que** l'élément d'étanchéité agissant axialement (18, 27) présente une deuxième saillie (23, 30), qui s'engrène dans la fente axiale (13, 28).

5. Dispositif d'entraînement selon la revendication 4, **caractérisé en ce que** la deuxième saillie (23, 30) repose avec un diamètre extérieur sur un alésage de passage (12) du boîtier (4).

6. Dispositif d'entraînement selon l'une quelconque ou plusieurs des revendications précédentes, **caractérisé en ce que** l'élément d'étanchéité agissant axialement (18, 27) repose sur le côté frontal (10) avec une surface annulaire (24).

7. Dispositif d'entraînement selon l'une quelconque ou plusieurs des revendications précédentes, **caractérisé en ce que** l'élément d'étanchéité agissant axialement (18, 27) est doté de lèvres d'étanchéité agissant radialement (25, 26), formées d'un seul tenant.

8. Dispositif d'entraînement selon l'une quelconque ou plusieurs des revendications précédentes, **caractérisé en ce que** le côté frontal (10) est doté d'éléments de retenue pour l'élément d'étanchéité agissant axialement (18, 27).

9. Dispositif d'entraînement selon l'une quelconque des revendications précédentes, **caractérisé en ce que** la zone de contact de l'élément d'étanchéité (18, 27) sur le boîtier (4) et la zone de contact de l'élément d'étanchéité (18, 27) sur l'élément d'entraînement (6) présentent au moins dans une large mesure la même distance radiale par rapport à l'axe de l'arbre d'essuie-glace (15).
